# EUROPÄISCHE PATENTSCHRIFT

(11) **EP 1 812 248 B1**
(45) Veröffentlichungstag und Bekanntmachung des Hinweises auf die Patenterteilung: **20.01.2010**
(21) Anmeldenummer: 05819941.5
(22) Anmeldetag: 11.11.2005
(51) Int. Cl.: B60B 27/00

(54) **EINHEIT AUS WENIGSTENS EINEM TRÄGER UND AUS EINEM RADLAGER**
UNIT COMPRISING AT LEAST ONE CARRIER AND A WHEEL BEARING
UNITE CONSTITUEE D'AU MOINS UN SUPPORT ET D'UN ROULEMENT DE ROUE

(30) Priorität: 16.11.2004 DE 102004055205
(43) Veröffentlichungstag der Anmeldung: 01.08.2007
(73) Patentinhaber: Schaeffler KG, 97421 Schweinfurt (DE)
(72) Erfinder: NIEBLING, Peter, 97688 Bad Kissingen (DE); RUOFF, Gottfried, 97464 Niederwerrn (DE); DÖPPLING, Horst, 91074 Herzogenaurach (DE); DLUGAI, Darius, 97421 Schweinfurt (DE)
(86) Internationale Anmeldenummer: PCT/DE2005/002033
(87) Internationale Veröffentlichungsnummer: WO 2006/053530

(56) Entgegenhaltungen:
- EP-A- 1 424 217
- US-A1- 2004 222 694
- US-B1- 6 170 919

## Beschreibung

### Gebiet der Erfindung

Die Erfindung betrifft eine Einheit aus einem Träger und einem Radlager, einen Außenring für das Radlager der Einheit und ein Verfahren zur Montage der Einheit, wobei das Radlager wenigstens einen Außenring mit zumindest einer Laufbahn für Wälzkörper aufweist und wobei das Radlager mittels eines ersten Verbindungsvorsprunges in einer ersten Aufnahme und mittels eines zweiten Verbindungsvorsprunges in einer zweiten Aufnahme zumindest in beide axiale Richtungen des Radlagers durch jeweils ein an jedem der Verbindungsvorsprünge radial umgelegtes Ende unbeweglich zu dem Träger an dem Träger gehalten ist.

### Hintergrund der Erfindung

Eine derartige Einheit ist in EP 1 424 217 A2 näher beschrieben. Der Träger ist aus zwei schalenförmig umgeformte Trägerelementen aus Blech gebildet. Jedes der Trägerelemente weist eine Aufnahme auf, die aus dem Randbereich des Trägerelementes ausgeformt ist. In diesem Fall ist jede der Aufnahmen hohlzylindrisch und zu der anderen Aufnahme identisch ausgebildet. In die Aufnahmen ist der Außenring eingeführt, der aufgrund der Gestalt und Anordnung der Aufnahmen eine außen durchgängig zylindrische Form aufweisen muss. Die Verbindungsvorsprünge an dem Außenring sind so angeordnet, dass diese den Träger axial zwischen sich einklemmen. Die Klemmkraft wird beim radialen plastischen Umlegen der Enden aus dem Material der Verbindungsvorsprünge erzeugt.

### Zusammenfassung der Erfindung

Zu dem Zeitpunkt, an dem die Erfindung gemacht wurde, bestand die Aufgabe, eine Einheit aus einem Träger und der Radlagerung zu schaffen, die kostengünstig herzustellen und die robust ausgebildet ist.

Die Aufgabe ist mit den Merkmalen des kennzeichnenden Teiles des Anspruches 1 und weiterer Ansprüche gelöst.

Der Träger liegt an zwei, vorzugsweise axial, also richtungsgleich mit der Rotationsachse des Radlagers, voneinander weg gewandten Anschlägen fest an. Die Anschläge sind relativ zu dem Außenring an dem Außenring oder an einem Außenteil fest. Wenn die Anschläge an einem Außenteil fest sind, ist wenigstens ein Außenring des Radlagers in dem Außenteil beliebiger Gestalt aufgenommen. Wenigstens einer der Anschläge ist an dem Außenteil oder vorzugsweise an Außenring als separates Teil, beispielsweise in Form eines Sicherungsringes/einer Sicherungsscheibe für Wellensitze, fest oder ist einteilig an dem Außenring ausgebildet.

Von jedem der Anschläge aus geht einer der Verbindungsvorsprünge vorzugsweise axial ab. Der bzw. die Verbindungsvorsprung/Verbindungsvorsprünge ist/sind vorzugsweise einteilig an dem Außenring ausgebildet. Der Außenring ist spanabhebend bearbeitet oder aber auch ein Kaltumformteil, in dem zwei der Laufbahnen ausgebildet sind. Jeder der Verbindungsvorsprünge geht von einem Grundkörper des Außenringes aus axial in eine andere Richtung ab.

Der jeweilige Anschlag ragt soweit radial über den Verbindungsvorsprung hinaus, dass der Träger zumindest mit einem Teil der Randzone der Aufnahme an dem Träger axial an dem Anschlag anschlägt. Dazu korrespondiert die Innenkontur der Aufnahme mit dem jeweiligen Anschlag so, dass der Axialanschlag auch unter hohen Lasten immer an der Randzone der Aufnahme anliegt und nicht unbeabsichtigt in die Aufnahme hinein oder durch diese hindurchgedrückt wird.

Dem Anschlag liegt auf der anderen Seite der Wandung des Trägers ein radial von dem Verbindungsvorsprung weg geformtes Ende aus dem Material des Verbindungsvorsprunges gegenüber. Diese Ende ragt radial ebenso, wie der auf der anderen Seite der Wandung gegenüberliegende Anschlag, radial soweit in die Randzone, dass eine sichere Verbindung zwischen dem Träger und dem Radlager an der Aufnahme hergestellt ist. Denkbar ist auch, dass das radial aus dem Verbindungsvorsprung geformte Ende innerhalb der jeweiligen Aufnahme an der Randzone einer Durchgangsöffnung in der Aufnahme axial anliegt und somit axial nicht bzw. nur teilweise aus der Aufnahme herausragt. Die Anschläge sind vorzugsweise Kreisringflächen.

Die Innenkonturen der Aufnahmen und die Außenkonturen der Verbindungsvorsprünge sind beliebig in allen denkbaren miteinander korrespondierenden Formen ausgeführt, aber vorzugsweise zur Rotationsachse der Radlagerung rotationssymmetrisch ausgebildet. Es ist auch denkbar, dass der Außenring in dem Träger mittels formschlüssig ineinander greifender Mittel in Umfangsrichtung um die Rotationsachse des Radlagers gegen Verdrehen gesichert ist. Diese formschlüssigen Mittel sind an dem Verbindungsvorsprung bzw. an dessen umgeformten Ende oder auch an dem Axialanschlag ausgebildet. Mit diesen formschlüssigen Mitteln korrespondieren formschlüssige Gegenmittel an der Aufnahme oder an der Randzone der betroffenen Aufnahme. Die Mittel sind ein oder mehrere radial oder axial hervor- bzw. zurückstehende und entsprechend formschlüssig ineinander eingreifende Sicherungsmittel wie zum Beispiel miteinander im Eingriff stehende Verzahnungen.

Das Ende ist vorzugsweise ein Bördelbund, auch Wälznietbund genannt. Ein derartiger Bund ist durch plastisches Verformen eines zunächst radial von dem Verbindungsvorsprung abstehenden Ringabschnittes aus dem Material des Verbindungsvorsprunges erzeugt. Die Verbindungsvorsprünge sind dazu vor der Befestigung des Außenringes in den Aufnahmen in axiale Richtung länger als die jeweilige einem der Verbindungsvorsprünge zugeordneten sowie lochförmig ausgebildeten Aufnahmen axial breit sind. Der so axial an der von dem Anschlag abgewandten Seite des Träges aus der Aufnahme über den Träger hinausragende Anteil an Material der Verbindungsvorsprünge bildet nach der Befestigung des Außenringes an dem Träger die radial umgelegten Enden.

Das Material der Verbindungsvorsprünge wird bei der Befestigung des Außenringes in dem Träger radial nach außen so verdrängt und verformt, dass durch das jeweilige Ende ein rotationssymmetrisch zur Rotationsachse des Radlagers sowie einteilig mit dem Verbindungsabschnitt ausgebildeter Nietbund/Kopf geformt ist, der radial über die Außenmantelfläche des in dem Durchgangsloch verbleibenden Abschnittes an dem Verbindungsvorsprung hinaus ragt. Der Außendurchmesser der Verbindungsvorsprünge verringert sich zumindest an dem für das Umformen des Endes vorgesehenen Ringabschnitt vor dem radialen Umlegen der Enden mit zunehmenden Abstand von dem jeweiligen Axialanschlag. Die Wandstärke der vor dem radialen Umlegen der Enden zur Rotationsachse des Radlagers rotationssymmetrisch ausgebildeten Verbindungsvorsprünge nimmt vordem radialen Umlegen der Enden mit zunehmenden axialen Abstand zu den Anschlägen ab. Durch derartige Maßnahmen können beispielsweise die Umformkräfte und der Umformgrad beim Wälznieten optimal angepasst werden. Die Außenkontur der Verbindungsvorsprünge ist vor dem radialen Umlegen der Enden in einem Längsschnitt durch den Verbindungsvorsprung entlang der Rotationsachse des Radlagers betrachtet, gekrümmt oder verläuft zum Ende hin geradlinig abfallend.

Der Träger ist bevorzugt aus wenigstens einem Umformteil aus Blech vorzugsweise aus einem Kaltumformverfahren. Die Aufnahme ist ein Durchgangsloch in dem Blech des Trägers. Das Radlager ist dabei mittels wenigstens eines Trägers oder mittels zwei oder mehr untereinander verbundener oder nicht direkt miteinander Trägerelemente mit dem Fahrzeug verbunden, wobei zwei Trägerelemente jeweils mit einer der Aufnahmen versehen sind. Das Radlager ist zum Beispiel bevorzugt in einem Träger gehalten, der aus mindestens zwei schalenförmig ausgebildeten Umformteilen aus Blech ist. Diese Umformteile sind zum Beispiel miteinander verschweißt oder vernietet. Für den Träger und seine Elemente wird vorzugsweise Blech geringer Wandstärke eingesetzt um das Gewicht der Einheit so gering wie möglich zu halten. Derartige Schalen erhalten durch entsprechende Gestaltung hohe Stabilität.

Insbesondere dann, wenn dünnes Blech für den Träger oder die Trägerelemente eingesetzt wird, ist, wie eine Ausgestaltung der Erfindung vorsieht, die Aufnahme in einer Doppelung des Bleches ausgebildet. Die Doppelung des Bleches ist durch den Rand der Aufnahme gebildet, der bei der Herstellung des Trägers zunächst in axiale Richtung um ca. 90° zum Blech durchgestellt und dann schließlich radial von der Mittelachse der Aufnahme weggerichtet umgelegt und gegen den Träger angelegt wird.

Die Aufnahme weist innen eine zylindrische Mantelfläche auf oder ist vorzugsweise vollständig innen durch eine von einer kreiszylindrischen Form abweichende Innenmantelfläche begrenzt. Die Innenmantelfläche ist demnach alternativ innenkonisch oder ballig ausgebildet.

Die Reihenfolge der Montage des Trägers oder seiner Elemente an einen Außenring mit zwei voneinander abgewandten Anschlägen und jeweils einem von dem jeweiligen Anschlag abgehenden der Verbindungsvorsprünge ist von dem Aufbau des Trägers abhängig. Die Montage zwei voneinander unabhängiger Trägerelemente ist einfach, da jedes der Trägerelemente an seiner Aufnahme auf einen der Verbindungsvorsprünge aufgeschoben und dann durch Umlegen des Verbindungsvorsprunges befestigt wird. Die Trägerelemente sind danach entweder einzeln und voneinander getrennt an dem Außenring fest oder werden dann in einem nachfolgenden Schritt noch untereinander zu einem gemeinsamen Träger miteinander verbunden.

Für die Montage eines Trägers, der beide der Aufnahmen aufweist, in dem ein Außenring mit zwei voneinander abgewandten Anschlägen und jeweils einem von dem jeweiligen Anschlag abgehenden der Verbindungsvorsprüngen aufgenommen werden soll, ist erfindungsgemäß ein Verfahren vorgesehen. Das Verfahren sieht vor, dass der Außenring beim Befestigen an dem Träger zunächst durch eine Öffnung des Trägers hindurchgeführt und mit einem der Verbindungsvorsprünge in eine Ausnehmung eingeführt wird. Die Öffnung ist die zunächst im Montagequerschnitt größere Vorform der anderen Aufnahme und weist somit einen ersten Öffnungsquerschnitt auf, der auf einen Öffnungsquerschnitt der anderen Ausnehmung und somit auf die Außenkontur des anderen Verbindungsabschnittes einengbar ist. Die Montageöffnung muss mindestens einen Öffnungsquerschnitt aufweisen, durch den der Außenring zumindest mit den radial über die Verbindungsvorsprünge hinausragenden Axialanschlägen oder aber auch generell ein Außenring mit größeren Außenabmessungen als die zumindest des Verbindungsvorsprunges, der axial durch die Öffnung in die Aufnahme eingeführt wird, axial hindurch passt. Der Außenring sitzt nach diesem Schritt vorzugsweise mit einem Verbindungsvorsprung passgenau in einer der Aufnahmen. Die Abmessungen des anderen Verbindungsvorsprunges und der Öffnung weichen noch voneinander ab.

Es ist denkbar, dass zunächst, der Passsitz des Verbindungsvorsprunges auf der einen Seite des Trägers durch Umlegen des Verbindungsvorsprunges axial gesichert wird oder es wird alternativ zuerst die Öffnung so durch plastisches Umformen des Materials auf den Querschnitt der weiteren Aufnahme eingeengt, dass beide Vorsprünge passgenau in jeweils einer der Aufnahme sitzen. In diesem Fall wird dann die Verbindung durch Erzeugen der Enden endgültig hergestellt.

### Beschreibung der Zeichnungen

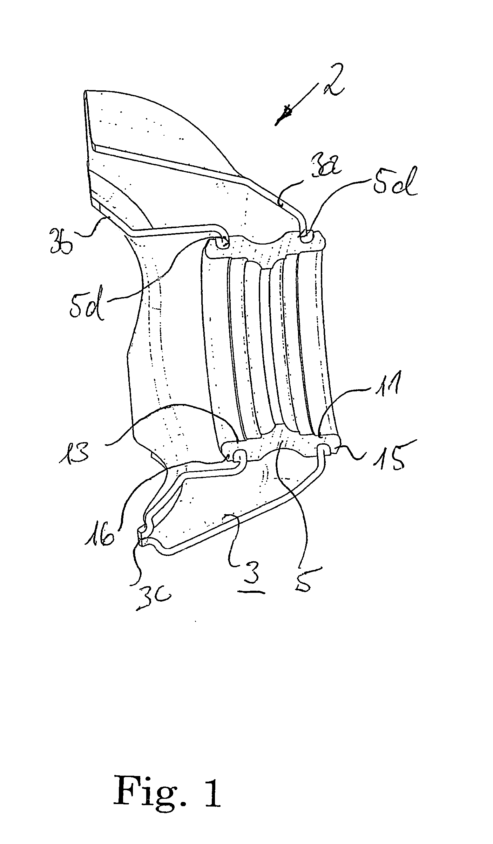

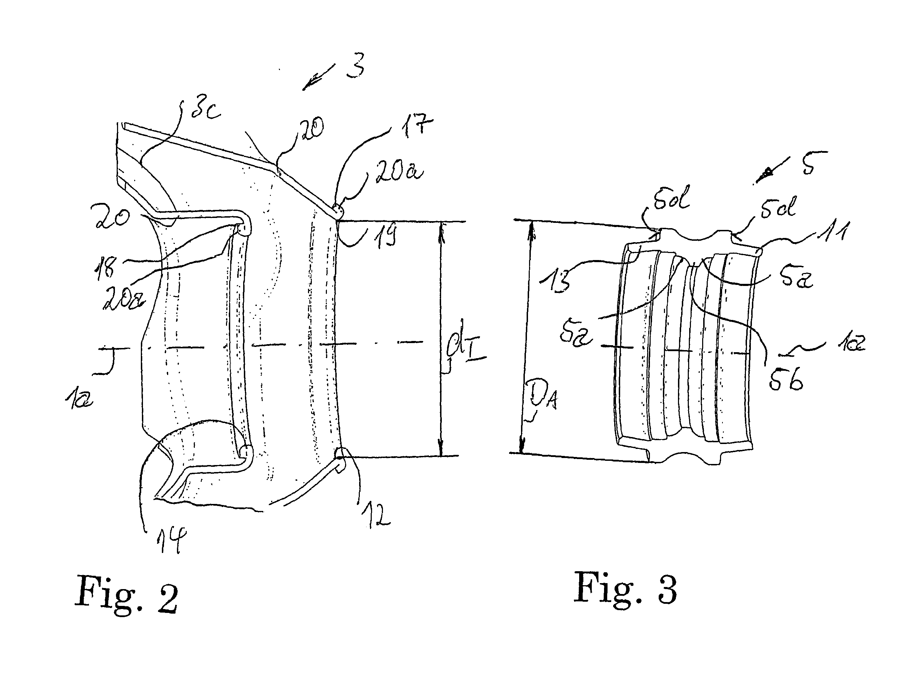

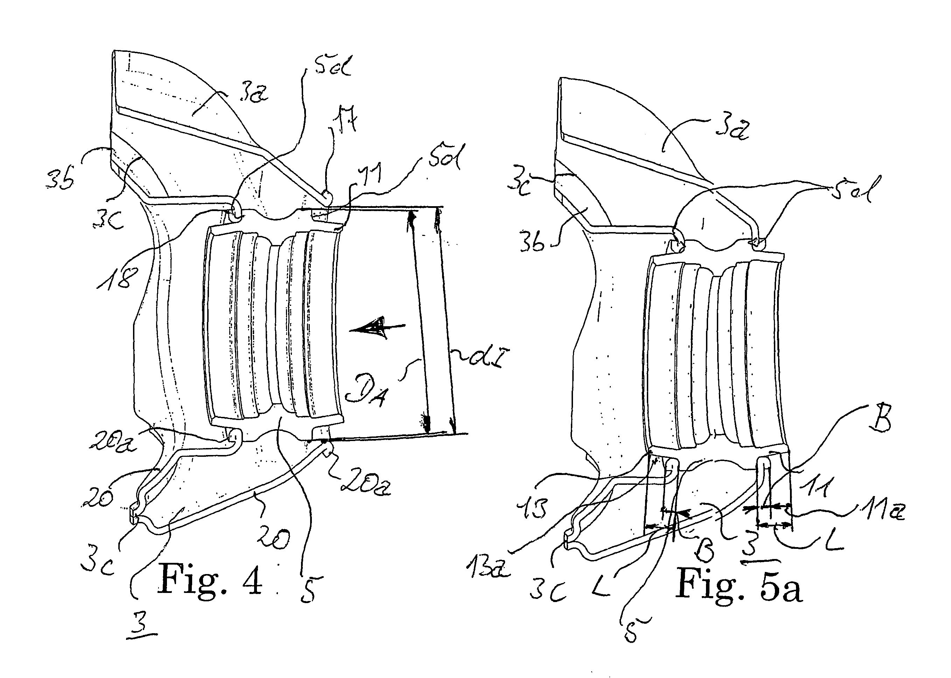

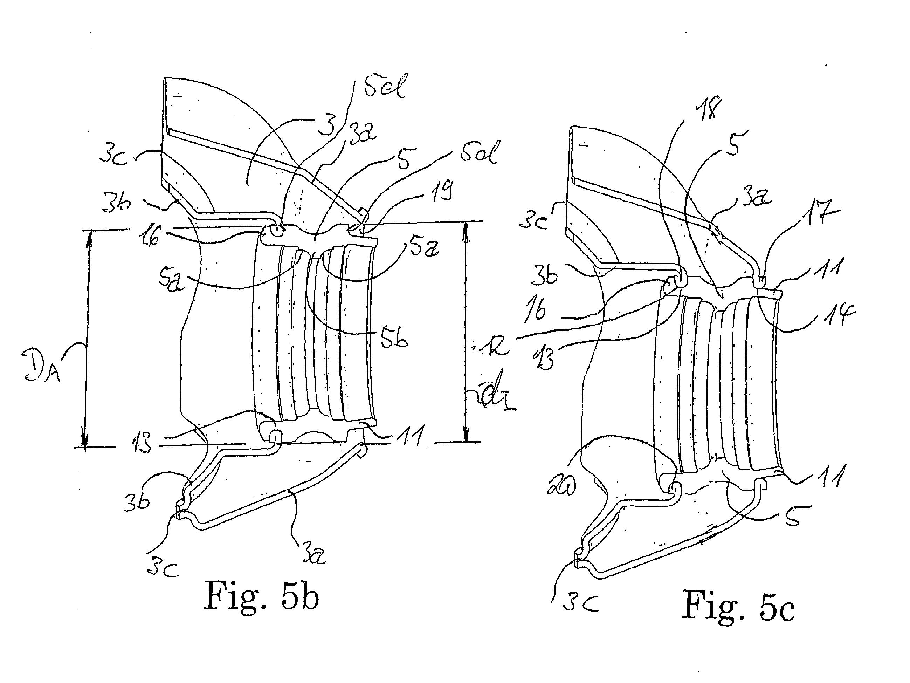

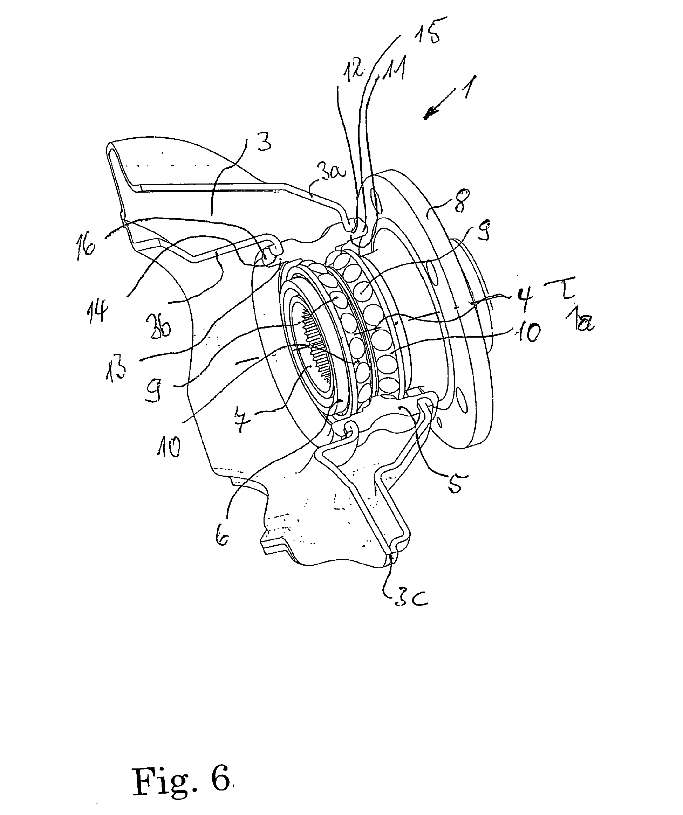

Nachfolgend wird die Erfindung anhand von Ausführungsbeispielen näher erläutert. Figur 6 zeigt eine Einheit 1 aus einem Träger 3 und einem Radlager 4 in einer teilweise geschnittenen Gesamtansicht. In Figur 1 ist eine fertig montierte Baugruppe 2 der Einheit 1 nach Figur 1 dargestellt. Die Baugruppe 2 besteht aus dem Träger 3 und aus einem Außenring 5 des Radlagers 4. Die Figuren 2 und 3 zeigen den Träger 3 bzw. den Außenring 5. In den Figuren 4, 5a und 5b sind einzelne Schritte des erfindungsgemäßen Verfahrens zur Montage der der Baugruppe 2 dargestellt. Die Figuren 1 bis 5 sind Schnittdarstellungen in einem Längsschnitt entlang der Längsmittelachse 1a der Einheit 1.

Das Radlager 4, in diesem Fall vom Typ eines zweireihigen Schrägkugellagers, ist durch den Außenring 5, Innenringe 6 auf einer Nabe 7 mit einem Flansch 8 und durch zwei Reihen Wälzkörper 9 in Käfigen 10 gebildet. Die Erfindung gilt auch für die Anwendung an Einheiten mit Rollenlagern.

Das Radlager 4 ist mittels eines ersten Verbindungsvorsprunges 11 in einer ersten Aufnahme 12 und mittels eines zweiten Verbindungsvorsprunges 13 in einer zweiten Aufnahme 14 in beide mit der Längsmittelachse 1a gleichgerichteten axiale Richtungen des Radlagers 4 gehalten. Dazu greift jeder der Verbindungsvorsprünge 11 bzw. 13 axial in jeweils eine der Aufnahmen 12 bzw. 14 ein. Der Außenring 5 ist durch jeweils ein an jedem der Verbindungsvorsprünge 11 bzw. 13 radial umgelegtes Ende 15 bzw. 16 unbeweglich zu dem Träger 3 an dem Träger 3 gehalten.

Der in Figur 3 als Einzelteil dargestellte Außenring 5 weist zwei Laufbahnen 5a für die Wälzkörper 9 auf. Die Laufbahnen 5a sind zumindest teilweise an einem radial in Richtung der Längsmittelachse 1a hervorstehenden Mittelbord 5b ausgebildet. Der Außenring 5 ist bevorzugt ein Kaltumformteil und ist einteilig mit den Verbindungsvorsprüngen 11 und 13 ausgebildet. Jeder der Verbindungsvorsprünge 11 und 13 erstreckt sich von einem an dem Grundkörper 5c ausgebildeten Anschlag 5d des Außenringes 5 aus gleichgerichtet mit der Rotationsachse in eine der axialen Richtungen. Die Anschläge 5d sind jeweils in eine der axialen Richtungen gewandte Kreisringflächen.

Die Verbindungsvorsprünge 11 und 13 sind zumindest vor dem radialen Umlegen der Enden 15 und 16 so rotationssymmetrisch zur Rotationsachse 1a des Radlagers 4 ausgebildet, dass die Außenkontur der Verbindungsvorsprünge 11 und 13 mit zunehmenden Abstand von dem jeweiligen Axialanschlag 5d im Außendurchmesser kleiner wird. Die radiale Wandstärke der Verbindungsvorsprünge 11 und 13 nimmt mit zunehmenden axialen Abstand zu den Anschlägen 5d ab. Dabei fällt die Außenkonturlinie zu dem freien axialen Ende hin gekrümmt ab.

Der beschriebenen Außenring 5 ist rotationssymmetrisch und axialsymmetrisch ausgebildet. Es ist auch denkbar, dass ein derartiger Außenring nicht rotationssymmetrisch und axialsymmetrisch ausgebildet ist. Es ist auch vorgesehen, das sich die radialen und/oder axialen Abmessungen der Verbindungsvorsprünge an einem Außenring voneinander unterscheiden. Dementsprechend angepasst weisen dann auch die Aufnahmen eines Trägers zueinander unterschiedliche Abmessungen auf.

Der Träger 3 ist in Figur 2 dargestellt und ist aus zwei Trägerelementen 3a und 3b gebildet. Jedes der Trägerelemente 3a, 3b ist in dieser Anwendung ein schalenförmiges Umformteil aus Blech aus Kaltumformverfahren. Die Trägerelemente 3a und 3b sind mittels Blechverbindungen 3c aneinander befestigt. Es ist auch denkbar, dass das Radlager 4 an zwei nicht direkt aneinander verbundenen Trägern 3a und 3b befestigt ist. In jedem der Trägerelemente 3a und 3b ist jeweils eine der Aufnahmen 12 bzw. 14 ausgebildet.. In Figur 2 ist die Aufnahme 12 in der Vorform in Form der Öffnung 19 dargestellt.

Die Aufnahmen 12 und 14 sind innerhalb einer Doppelung 17 bzw. 18 des Bleches ausgebildet. Die Doppelung 17, 18 durch einen von der jeweiligen Aufnahme 12, 14 radial nach außen von der Rotationsachse 1a der Einheit 1 weg umgelegten und sich axial an das Blech 20 des Trägeelementes 3a, 3b anschließenden Anteil 20a des Bleches 20 gebildet. Die Kontur der Aufnahmen 12, 14 innen ist ballig ausgeführt und weicht somit von einer kreiszylindrischen Innenform ab.

Bei der Montage des Außenringes 5 in den Träger 3 wird der Außenring 5 zunächst durch eine Öffnung 19 des Trägers 3 (des Trägerelementes 3b) in die mit dem Pfeil gekennzeichnete Richtung (Figur 4) hindurchgeführt und mit dem zweiten Verbindungsvorsprung 13 in die zweite Ausnehmung 14 eingeführt. Dabei ist es denkbar, dass der Verbindungsvorsprung 13 in die Ausnehmung 14 eingepresst oder auch mit einem Schiebepasssitz eingeführt wird. Die Öffnung 19 weist einen durch den Durchmesser dl beschriebenen Öffnungsquerschnitt auf. Dl ist größer als der maximale Außendurchmesser DA des Außenringes 5. Der maximale Außendurchmesser DA beschreibt auch die Außenabmessung der Kreisringflächen an den Anschlägen 5d. auf einen zweiten Öffnungsquerschnitt der ersten Ausnehmung einengbar ist und wobei der erste Öffnungsquerschnitt mindestens so groß ist, dass der Außenring mit den Axialanschläge durch die Öffnung geführt werden kann.

Die Montage der Baueinheit kann nach dem Einführen des zweiten Verbindungsvorsprunges 13 in die zweite Aufnahme 14 wahlweise mit nachfolgend beschriebenen gleichwertigen Verfahrenschritten fortgesetzt werden:
- Nach einem der alternativen Verfahrensschritte ist der Außenring 5, wie in Figur 5b dargestellt, zunächst durch radiales Umlegen des zweiten Endes 16 aus dem Material des Verbindungsvorsprunges 13, an einem der Axialanschläge 5d anliegend, an dem Träger 3 bzw. dem Trägerelement 3b befestigt. Es folgt diesem Schritt dann ein weiterer, bei dem die Öffnung 19 durch plastisches Umformen zur ersten Aufnahme 12 so eingeengt wird, dass die erste Aufnahme 12 den ersten Verbindungsvorsprung 11 umgreift. Dieser Zustand ist in Figur 5c bildlich dargestellt. Schließlich wird der Außenring 5 durch radiales Umlegen des ersten Endes 15 aus dem Material des Verbindungsvorsprunges 11, an einem der Axialanschläge 5d anliegend, an dem Träger 3 bzw. dem Trägerelement 3b befestigt, so dass die in Figur 2 dargestellte Baueinheit 2 vorliegt.
- Nach dem anderen der alternativen Verfahrensschritte ist der Außenring 5, wie in Figur 5a dargestellt, zunächst axial zwischen den Trägerelementen 3a und 3b axial gehalten. Dazu wird die Öffnung 19 durch plastisches Umformen zur ersten Aufnahme 12 so eingeengt, dass die erste Aufnahme 12 den ersten Verbindungsvorsprung 11 umgreift. Schließlich wird der Außenring 5 durch radiales Umlegen des ersten Endes 15 aus dem Material des Verbindungsvorsprunges 11 und durch zeitversetztes oder zeitsynchrones radiales Umlegen des zweiten Endes 16 aus dem Material des Verbindungsvorsprunges 13, an einem der Axialanschläge 5d anliegend, an dem Träger 3 bzw. dem Trägerelement 3a bzw.3b befestigt, so dass die in Figur 2 dargestellte Baueinheit 2 vorliegt.

Wie aus den Darstellungen der Figuren 5a und 5b ersichtlich ist, sind die Verbindungsvorsprünge vor der Befestigung des Außenringes in den Aufnahmen in axiale Richtung länger (L) als die jeweilige einem der Verbindungsvorsprünge zugeordneten sowie lochförmig ausgebildeten Aufnahmen axial breit (B) sind (L > B). Der axial überstehende Anteil (Ringabschnitte 11a und 13a) weist den Anteil an Material auf , der nach der Befestigung des Außenringes 5 an dem Träger 3 die radial umgelegten Enden 15 bzw. 16 bildet. An der fertig montierten Baueinheit durchgreift jeder der Verbindungsvorsprünge 11, 13 eine der Ausnehmungen 12, 14 so axial, dass jeweils einer der Anschläge 5d und eines der Enden 15 bzw. 16 einen Teil des Trägers axial zwischen sich nehmen.

### Bezugszeichen

- 1: Einheit
- 1a: Längsmittelachse
- 2: Baugruppe
- 3: Träger
- 3a: Trägerelement
- 3b: Trägerelement
- 3c: Blechverbindung
- 4: Radlager
- 5: Außenring
- 5a: Laufbahn
- 5b: Mittelbord
- 5c: Grundkörper
- 5d: Anschlag
- 6: Innenring
- 7: Nabe

- 8: Flansch
- 9: Wälzkörper
- 10: Käfig
- 11: erster Verbindungsvorsprung
- 11a: Ringabschnitt
- 12: erste Aufnahme
- 13: zweiter Verbindungsvorsprung
- 13a: Ringabschnitt
- 14: zweite Aufnahme
- 15: Ende
- 16: Ende
- 17: Doppelung
- 18: Doppelung
- 19: Öffnung
- 20: Blech
- 20a: Anteil

## Patentansprüche

1. Einheit (1) aus einem Träger (3) und einem Radlager (4), wobei das Radlager (4) wenigstens einen Außenring (5) mit zumindest einer Laufbahn (5a) für Wälzkörper (9) aufweist und wobei das Radlager (4) mittels eines ersten Verbindungsvorsprunges (11) in einer ersten Aufnahme (12) und mittels eines zweiten Verbindungsvorsprunges (13) in einer zweiten Aufnahme (14) zumindest in beide axiale Richtungen des Radlagers (4) durch jeweils ein an jedem der Verbindungsvorsprünge (11, 13) radial umgelegtes Ende (15, 16) unbeweglich zu dem Träger (3) an dem Träger (3) gehalten ist, **dadurch gekennzeichnet, dass** der Träger (3) an zwei voneinander weg gewandten Anschlägen (5d) fest anliegt, wobei die Anschläge (5d) relativ zu dem Außenring (5) fest sind, und dass jeweils eines der radial umgeformten Enden (15, 16) und jeweils einer der Anschläge (5d) jeweils einen Abschnitt des Trägers (3) zwischen sich nehmen.

2. Einheit nach Anspruch 1, **dadurch gekennzeichnet, dass** die Anschläge (5d) axial voneinander weg gewandt sind und dass sich die Aufnahmen (12, 14) einander axial gegenüberliegen.

3. Einheit nach Anspruch 1, **dadurch gekennzeichnet, dass** von jedem der Anschläge (5d) aus einer der Verbindungsvorsprünge (15, 16) axial abgeht.

4. Einheit nach Anspruch 1, **dadurch gekennzeichnet, dass** wenigstens einer der Anschläge (5d) einteilig an dem Außenring (5) ausgebildet ist.

5. Einheit nach Anspruch 4, **dadurch gekennzeichnet, dass** beide der Anschläge (5d) sowie beide der Verbindungsvorsprünge (11, 13) einteilig mit dem Außenring (5) ausgebildet sind, wobei jeder der Verbindungsvorsprünge (11, 13) eine der Ausnehmungen (12, 14) axial durchgreift und dass jeweils einer der Anschläge (5d) und eines der Enden (15, 16) einen Teil des Trägers (3) axial zwischen sich nehmen.

6. Einheit nach Anspruch 1, **dadurch gekennzeichnet, dass** der Träger (3) aus wenigstens einem Umformteil aus Blech ist.

7. Einheit nach Anspruch 6, **dadurch gekennzeichnet, dass** das Umformteil aus zumindest einem Kaltumformverfahren ist.

8. Einheit nach Anspruch 7, **dadurch gekennzeichnet, dass** zumindest eine der Aufnahmen (12, 14) innerhalb einer Doppelung (17, 18) des Bleches ausgebildet ist, wobei die Doppelung (17, 18) durch einen von der Aufnahme (12, 14) radial nach außen von der Rotationsachse der Einheit (1) weg umgelegten und sich axial an das Blech des Trägers (3) anschließenden Anteil des Bleches gebildet ist.

9. Einheit nach Anspruch 1, **dadurch gekennzeichnet, dass** zumindest eine der Aufnahmen (12, 14) vollständig innen durch eine von einer kreiszylindrischen Form abweichende Innenmantelfläche begrenzt ist.

10. Einheit nach Anspruch 1, **dadurch gekennzeichnet, dass** der Träger (3) aus wenigstens zwei Trägerelementen (3a, 3b) gebildet ist, wobei jedes der Trägerelemente (3a, 3b) mit einer der Aufnahmen (12, 14) versehen ist.

11. Einheit nach Anspruch 10, **dadurch gekennzeichnet, dass** die Trägerelemente (3a, 3b) miteinander verbunden sind.

12. Außenring eines Radlagers für eine Einheit (1) nach Anspruch 1, **dadurch gekennzeichnet, dass** der Außenring (5) zumindest ein Kaltumformteil ist.

13. Außenring eines Radlagers für eine Einheit (1) nach Anspruch 1, **dadurch gekennzeichnet, dass** in dem Außenring (5) zwei der Laufbahnen (5a) ausgebildet sind.

14. Außenring eines Radlagers für eine Einheit (1) nach Anspruch 1, **dadurch gekennzeichnet, dass** sich jeder der Verbindungsvorsprünge (11, 13) von einem Grundkörper des Außenringes (5) aus axial in eine andere Richtung erstreckt, wobei jeder der Verbindungsvorsprünge (11, 13) von mindestens einem an dem Grundkörper ausgebildeten der Anschläge (5d) aus abgeht.

15. Außenring nach Anspruch 14, **dadurch gekennzeichnet, dass** die Anschläge (5d) Kreisringflächen sind.

16. Außenring nach Anspruch 14, **dadurch gekennzeichnet, dass** die Verbindungsvorsprünge (11, 13) vor der Befestigung des Außenringes in den Aufnahmen (12, 14) in axiale Richtung länger sind als die jeweilige einem der Verbindungsvorsprünge (11, 13) zugeordneten sowie lochförmig ausgebildeten Aufnahmen (12, 14) axial breit sind, wobei die Verbindungsvorsprünge (11, 13) den Anteil an Material aufweisen, der nach der Befestigung des Außenringes (5) an dem Träger (3) die radial umgelegten Enden (15, 16) bildet.

17. Außenring nach Anspruch 14, **dadurch gekennzeichnet, dass** die Verbindungsvorsprünge (11, 13) vor dem radialen Umlegen der Enden (15, 16) rotationssymmetrisch zur Rotationsachse (1a) des Radlagers (4) ausgebildet sind.

18. Außenring nach Anspruch 14, **dadurch gekennzeichnet, dass** sich die Verbindungsvorsprünge (11, 13) vor dem radialen Umlegen der Enden (15, 16) mit zunehmenden Abstand von dem jeweiligen Anschlag (5d) im Außendurchmesser verringern.

19. Außenring nach Anspruch 18, **dadurch gekennzeichnet, dass** die Außenkontur der Verbindungsvorsprünge (11, 13) vor dem radialen Umlegen der Enden (15, 16) in einem Längsschnitt durch das Außenring (5) entlang der Rotationsachse (1 a) des Radlagers (4) betrachtet, gekrümmt ist.

20. Außenring nach Anspruch 14, **dadurch gekennzeichnet, dass** die Wandstärke der vor dem radialen Umlegen der Enden (15, 16) zur Rotationsachse (1 a) des Radlagers (4) rotationssymmetrisch ausgebildeten Verbindungsvorsprünge (11, 13) vor dem radialen Umlegen der Enden (15, 16) mit zunehmenden axialen Abstand zu den Anschlägen (5d) abnimmt.

21. Verfahren zur Montage einer Einheit (1) nach Anspruch 1, **dadurch gekennzeichnet dass** der Außenring (5) beim Befestigen an dem Träger (3) zunächst durch eine Öffnung (19) des Trägers (3) hindurchgeführt und mit dem zweiten der Verbindungsvorsprünge (11, 13) in die zweite Aufnahme (14) eingeführt wird, wobei die Öffnung einen ersten Öffnungsquerschnitt aufweist der auf einen zweiten Öffnungsquerschnitt der ersten Aufnahme (12) einengbar ist und wobei der erste Öffnungsquerschnitt mindestens so groß ist, dass der Außenring (5) mit den Anschläge (5d) durch die Öffnung (19) geführt werden kann.

22. Verfahren nach Anspruch 21, **dadurch gekennzeichnet, dass** der Außenring (5) durch radiales Umlegen des zweiten Endes (16) aus dem Material des zweiten Verbindungsvorsprunges (13), an einem der Anschläge (5d) anliegend, zumindest an einem Teil des Trägers (3) befestigt wird.

23. Verfahren nach Anspruch 22, **dadurch gekennzeichnet, dass** die Öffnung (19) durch elastisches und plastisches Umformen zur ersten Aufnahme (12) eingeengt wird, wobei die erste Aufnahme (12) den ersten Verbindungsvorsprung (11) umgreift.

24. Verfahren nach Anspruch 23, **dadurch gekennzeichnet, dass** der Außenring durch radiales Umlegen des ersten Endes (15) aus dem Material des ersten Verbindungsvorsprunges (11), an dem anderen der Anschläge (5d) anliegend, an dem Träger (3) befestigt wird.

25. Verfahren nach Anspruch 21, **dadurch gekennzeichnet, dass** zunächst der Außenring durch radiales Umlegen des zweiten Endes (16) aus dem Material des zweiten Verbindungsvorsprunges (13), an einem der Anschläge (5d) anliegend, zumindest an einem Teil des Trägers (3) befestigt wird, dass dann in einem weiteren Verfahrensschritt die Öffnung (19) durch elastisches und plastisches Umformen zur ersten Aufnahme (12) eingeengt wird, wobei die erste Aufnahme (12) den ersten Verbindungsvorsprung (11) umgreift.

26. Verfahren nach Anspruch 25, **dadurch gekennzeichnet, dass** in einem weiteren Verfahrensschritt oder synchron zu dem vorhergehenden Verfahrensschritt des vorhergehenden Anspruches der Außenring (5) durch radiales Umlegen des ersten Endes (15) aus dem Material des ersten Verbindungsabschnittes (11), an dem anderen der Anschläge (5d) anliegend, an dem Träger (3) befestigt wird.

## Claims

1. Unit (1) comprising a carrier (3) and a wheel bearing (4), the wheel bearing (4) having at least one outer ring (5) with at least one raceway (5a) for rolling bodies (9), and the wheel bearing (4) being held on the carrier (3) in a first receptacle (12) by means of a first connecting projection (11) and in a second receptacle (14) by means of a second connecting projection (13), immovably with respect to the carrier (3) at least in both axial directions of the wheel bearing (4) as a result of in each case one end (15, 16) which is folded over radially on each of the connecting projections (11, 13), **characterized in that** the carrier (3) bears fixedly against two stops (5d) which face away from one another, the stops (5d) being fixed relative to the outer ring (5), and **in that** in each case one of the radially reshaped ends (15, 16) and in each case one of the stops (5d) accommodate in each case one section of the carrier (3) between them.

2. Unit according to Claim 1, **characterized in that** the stops (5d) face axially away from one another, and **in that** the receptacles (12, 14) lie axially opposite one another.

3. Unit according to Claim 1, **characterized in that** one of the connecting projections (15, 16) protrudes axially from each of the stops (5d).

4. Unit according to Claim 1, **characterized in that** at least one of the stops (5d) is formed integrally on the outer ring (5).

5. Unit according to Claim 4, **characterized in that** both of the stops (5d) and both of the connecting projections (11, 13) are formed integrally with the outer ring (5), each of the connecting projections (11, 13) reaching axially through one of the recesses (12, 14), and **in that** in each case one of the stops (5d) and one of the ends (15, 16) accommodates one part of the carrier (3) axially between them.

6. Unit according to Claim 1, **characterized in that** the carrier (3) comprises at least one formed part made from sheet metal.

7. Unit according to Claim 6, **characterized in that** the shaped part is from at least one cold forming process.

8. Unit according to Claim 7, **characterized in that** at least one of the receptacles (12, 14) is formed within a doubling (17, 18) of the metal sheet, the doubling (17, 18) being formed by a portion of the metal sheet which is folded over radially outward away from the rotational axis of the unit (1) and adjoins the metal sheet of the carrier (3) axially.

9. Unit according to Claim 1, **characterized in that** at least one of the receptacles (12, 14) is delimited completely on the inside by an inner circumferential face which deviates from a circular shape.

10. Unit according to Claim 1, **characterized in that** the carrier (3) is formed from at least two carrier elements (3a, 3b), each of the carrier elements (3a, 3b) being provided with one of the receptacles (12, 14).

11. Unit according to Claim 10, **characterized in that** the carrier elements (3a, 3b) are connected to one another.

12. Outer ring of a wheel bearing for the unit (1) according to Claim 1, **characterized in that** the outer ring (5) is at least one cold formed part.

13. Outer ring of a wheel bearing for the unit (1) according to Claim 1, **characterized in that** two of the raceways (5a) are formed in the outer ring (5).

14. Outer ring of a wheel bearing for the unit (1) according to Claim 1, **characterized in that** each of the connecting projections (11, 13) extends axially from a basic body of the outer ring (5) in a different direction, each of the connecting projections (11, 13) protruding from at least one of the stops (5d) which are formed on the basic body.

15. Outer ring according to Claim 14, **characterized in that** the stops (5d) are circularly annular faces.

16. Outer ring according to Claim 14, **characterized in that** the connecting projections (11, 13) are longer in the axial direction before the fastening of the outer ring in the receptacles (12, 14) than the respective receptacles (12, 14) which are assigned to one of the connecting projections (11, 13) and are formed in the shape of holes are wide in the axial direction, the connecting projections (11, 13) having the portion of material which forms the radially folded over ends (15, 16) after fastening of the outer ring (5) on the carrier (3).

17. Outer ring according to Claim 14, **characterized in that** the connecting projections (11, 13) are configured to be rotationally symmetrical with respect to the rotational axis (1a) of the wheel bearing (4) before the ends (15, 16) are folded over radially.

18. Outer ring according to Claim 14, **characterized in that** the external diameter of the connecting projections (11, 13) is reduced as the spacing from the respective stop (5d) increases, before the ends (15, 16) are folded over radially.

19. Outer ring according to Claim 18, **characterized in that**, as viewed in a longitudinal section through the outer ring (5) along the rotational axis (1a) of the wheel bearing (4), the outer contour of the connecting projections (11, 13) is curved before the ends (15, 16) are folded over radially.

20. Outer ring according to Claim 14, **characterized in that** the wall thickness of the connecting projections (11, 13) which are configured to be rotationally symmetrical with respect to the rotational axis (1a) of the wheel bearing (4) before the ends (15, 16) are folded over radially decreases as the axial spacing from the stops (5d) increases, before the ends (15, 16) are folded over radially.

21. Method for assembling a unit (1) according to Claim 1, **characterized in that**, during fastening to the carrier (3), the outer ring (5) is first of all guided through an opening (19) of the carrier (3) and is inserted into the second receptacle (14) by way of the second of the connecting projections (11, 13), the opening having a first opening cross section which can be constricted to a second opening cross section of the first receptacle (12), and the first opening cross section being at least so large that the outer ring (5) having the stops (5d) can be guided through the opening (19).

22. Method according to Claim 21, **characterized in that** the outer ring (5) is fastened at least to one part of the carrier (3) by radial folding over of the second end (16) of the material of the second connecting projection (13), in a manner which bears against one of the stops (5d).

23. Method according to Claim 22, **characterized in that** the opening (19) is constricted by elastic and plastic deformation with respect to the first receptacle (12), the first receptacle (12) engaging around the first connecting projection (11).

24. Method according to Claim 23, **characterized in that** the outer ring is fastened to the carrier (3) by radial folding over of the first end (15) of the material of the first connecting projection (11), in a manner which bears against the other of the stops (5d).

25. Method according to Claim 21, **characterized in that** first of all the outer ring is fastened at least to one part of the carrier (3) by radial folding over of the second end (16) of the material of the second connecting projection (13), in a manner which bears against one of the stops (5d), and **in that**, in a further method step, the opening (19) is then constricted by elastic and plastic deformation with respect to the first receptacle (12), the first receptacle (12) engaging around the first connecting projection (11).

26. Method according to Claim 25, **characterized in that**, in a further method step or synchronously with the preceding method step of the preceding claim, the outer ring (5) is fastened to the carrier (3) by radial folding over of the first end (15) of the material of the first connecting section (11), in a manner which bears against the other of the stops (5d).

## Revendications

1. Unité (1) constituée d'un support (3) et d'un roulement de roue (4), dans laquelle le roulement de roue (4) comprend au moins une bague extérieure (5) avec au moins une piste de roulement (5a) pour des corps de roulement (9) et dans laquelle le roulement de roue (4) est maintenu sur le support (3) dans un premier logement (12) au moyen d'une première saillie d'assemblage (11) et dans un deuxième logement (14) au moyen d'une deuxième saillie d'assemblage (13) d'une manière immobile par rapport au support (3) au moins dans les deux directions axiales du roulement de roue (4) chaque fois par une extrémité (15, 16) repliée radialement sur chacune des saillies d'assemblage (11, 13), **caractérisée en ce que** le support (3) est appliqué fermement sur deux butées (5d) orientées à l'opposé l'une de l'autre, dans laquelle les butées (5d) sont fixes par rapport à la bague extérieure (5), et **en ce que** chaque fois une des extrémités (15, 16) déformées radialement et une des butées (5d) retiennent chaque fois entre elles une partie du support (3).

2. Unité selon la revendication 1, **caractérisée en ce que** les butées (5d) sont orientées axialement à l'opposé l'une de l'autre et **en ce que** les logements (12, 14) se font mutuellement face en direction axiale.

3. Unité selon la revendication 1, **caractérisée en ce qu'**une des saillies d'assemblage (15, 16) part axialement de chacune des butées (5d).

4. Unité selon la revendication 1, **caractérisée en ce qu'**au moins une des butées (5d) est réalisée d'une pièce sur la bague extérieure (5).

5. Unité selon la revendication 4, **caractérisée en ce que** les deux butées (5d) ainsi que les deux saillies d'assemblage (11, 13) sont réalisées d'une pièce sur la bague extérieure (5), dans laquelle chacune des saillies d'assemblage (11, 13) traverse axialement un des logements (12, 14) et **en ce qu'**une des butées (5d) et une des extrémités (15, 16) retiennent chaque fois axialement entre elles une partie du support (3).

6. Unité selon la revendication 1, **caractérisée en ce que** le support (3) est composé d'au moins une pièce déformée en tôle.

7. Unité selon la revendication 6, **caractérisée en ce que** la pièce déformée est réalisée par au moins un procédé de déformation à froid.

8. Unité selon la revendication 7, **caractérisée en ce qu'**au moins un des logements (12, 14) est réalisé à l'intérieur d'un doublage (17, 18) de la tôle, dans laquelle le doublage (17, 18) est formé par une pièce de tôle repliée en direction opposée au logement (12, 14) radialement vers l'extérieur par rapport à l'axe de rotation de l'unité (1) et se raccordant axialement à la tôle du support (3).

9. Unité selon la revendication 1, **caractérisée en ce qu'**au moins un des logements (12, 14) est limité entièrement à l'intérieur par une surface latérale intérieure s'écartant de la forme cylindrique ronde.

10. Unité selon la revendication 1, **caractérisée en ce que** le support (3) est formé d'au moins deux éléments de support (3a, 3b), dans laquelle chacun des éléments de support (3a, 3b) est pourvu d'un des logements (12, 14).

11. Unité selon la revendication 10, **caractérisée en ce que** les éléments de support (3a, 3b) sont reliés l'un à l'autre.

12. Bague extérieure d'un roulement de roue pour une unité (1) selon la revendication 1, **caractérisée en ce que** la bague extérieure (5) est au moins une pièce déformée à froid.

13. Bague extérieure d'un roulement de roue pour une unité (1) selon la revendication 1, **caractérisée en ce que** deux des pistes de roulement (5a) sont formées dans la bague extérieure (5).

14. Bague extérieure d'un roulement de roue pour une unité (1) selon la revendication 1, **caractérisée en ce que** chacune des saillies d'assemblage (11, 13) s'étend axialement à partir d'un corps de base de la bague extérieure (5) dans une autre direction, dans laquelle chacune des saillies d'assemblage (11, 13) part d'au moins une des butées (5d) formées sur le corps de base.

15. Bague extérieure selon la revendication 14,
**caractérisée en ce que** les butées (5d) sont des faces annulaires rondes.

16. Bague extérieure selon la revendication 14,
**caractérisée en ce que** les saillies d'assemblage (11, 13) sont plus longues, en direction axiale, avant la fixation de la bague extérieure dans les logements (12, 14), que la largeur axiale des logements respectifs (12, 14) associés à une des saillies d'assemblage (11, 13) et réalisés en forme de trous, dans laquelle les saillies d'assemblage (11, 13) présentent la quantité de matière, qui forme les extrémités repliées radialement (15, 16) après la fixation de la bague extérieure (5) sur le support (3).

17. Bague extérieure selon la revendication 14,
**caractérisée en ce que** les saillies d'assemblage (11, 13) présentent la symétrie de révolution autour de l'axe de rotation (1a) du roulement de roue (4) avant le repliage radial des extrémités (15, 16).

18. Bague extérieure selon la revendication 14,
**caractérisée en ce que** les saillies d'assemblage (11, 13) ont, avant le repliage radial des extrémités (15, 16), un diamètre extérieur qui diminue à mesure que la distance par rapport à la butée respective (5d) augmente.

19. Bague extérieure selon la revendication 18,
**caractérisée en ce que** le contour extérieur des saillies d'assemblage (11, 13) avant le repliage radial des extrémités (15, 16) est courbe, considéré le long de l'axe de rotation (1a) du roulement de roue (4) dans une coupe longitudinale à travers la bague extérieure (5).

20. Bague extérieure selon la revendication 14,
**caractérisée en ce que** l'épaisseur de paroi des saillies d'assemblage (11, 13) ayant la symétrie de révolution par rapport à l'axe de rotation (1a) du roulement de roue (4) avant le repliage radial des extrémités (15, 16) diminue, avant le repliage radial des extrémités (15, 16), à mesure que la distance axiale par rapport aux butées (5d) augmente.

21. Procédé de montage d'une unité (1) selon la revendication 1, **caractérisé en ce que** la bague extérieure (5) est, lors de la fixation sur le support (3), d'abord insérée à travers une ouverture (19) du support (3) et introduite avec la deuxième des saillies d'assemblage (11, 13) dans le deuxième logement (14), dans lequel l'ouverture présente une première section transversale d'ouverture qui peut être rétrécie à une deuxième section transversale d'ouverture du premier logement (12) et dans lequel la première section transversale d'ouverture est au moins tellement grande que la bague extérieure (5) puisse être guidée à travers l'ouverture (19) avec les butées (5d).

22. Procédé selon la revendication 21, **caractérisé en ce que** la bague extérieure (5) est fixée sur au moins une partie du support (3) par repliage radial de la deuxième extrémité (16) composée de la matière de la deuxième saillie d'assemblage (13), en application sur une des butées (5d).

23. Procédé selon la revendication 22, **caractérisé en ce que** l'ouverture (19) est rétrécie par déformation élastique et plastique jusqu'au premier logement (12), dans lequel le premier logement (12) entoure la première saillie d'assemblage (11).

24. Procédé selon la revendication 23, **caractérisé en ce que** la bague extérieure est fixée sur le support (3) par repliage radial de la première extrémité (15) composée de la matière de la première saillie d'assemblage (11), en application sur l'autre des butées (5d).

25. Procédé selon la revendication 21, **caractérisé en ce que** la bague extérieure est d'abord fixée au moins à une partie du support (3) par repliage radial de la deuxième extrémité (16) composée de la matière de la deuxième saillie d'assemblage (13), en application sur une des butées (5d), et **en ce que** dans une autre étape du procédé, l'ouverture (19) est rétrécie par déformation élastique et plastique jusqu'au premier logement (12), dans lequel le premier logement (12) entoure la première saillie d'assemblage (11).

26. Procédé selon la revendication 25, **caractérisé en ce que**, dans une autre étape du procédé ou en synchronisme avec l'étape de procédé précédente de la revendication précédente, la bague extérieure (5) est fixée sur le support (3) par repliage radial de la première extrémité (15) composée de la matière de la première saillie d'assemblage (11), en application sur l'autre des butées (5d).
